# EUROPEAN PATENT APPLICATION

(11) **EP 4 783 350 A1**
(43) Date of publication of application: **29.07.2026**
(21) Application number: 25206891.1
(22) Date of filing: 06.10.2025
(51) Int. Cl.: H01M 50/593, H01M 10/04, H01M 50/109, H01M 50/153, H01M 50/536, H01M 50/559

(54) **CAP ASSEMBLY AND SECONDARY BATTERY INCLUDING SAME**

(30) Priority: 24.01.2025 KR 20250011447
(71) Applicant: SAMSUNG SDI CO., LTD., Yongin-si, Gyeonggi-do 17084 (KR)
(72) Inventor: Jang, Taewoong, 17084 Yongin-si, Gyeonggi-do (KR)
(74) Representative: Meissner Bolte Partnerschaft mbB

(57) **Abstract**

A secondary battery includes a wound electrode assembly including a first electrode, a second electrode, and a separator between the first electrode and the second electrode, a case accommodating the electrode assembly, the case including a bottom portion, a sidewall portion connected to the bottom portion, and an opening facing the bottom portion, a first electrode tab connected to the first electrode, and a cap assembly coupled to one end of the sidewall portion to seal the opening, the cap assembly including an insulating washer between the cap assembly and each of the electrode assembly and the first electrode tab, and the insulating washer including a base film and a hard coating layer on a surface of the base film.

## Description

### BACKGROUND

### 1. Field

The present invention relates to a cap assembly and a secondary battery including the cap assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present invention, and therefore, it may contain information that does not constitute related (or prior) art.

### SUMMARY OF THE INVENTION

The present invention concerns a secondary battery including a wound electrode assembly including a first electrode, a second electrode, and a separator interposed between the first electrode and the second electrode, a case includes a bottom portion, a sidewall portion connected to the bottom portion, and an opening facing the bottom portion, and accommodating the electrode assembly, a cap assembly coupled to one end of the sidewall portion to seal the opening, and a first electrode tab connected to the first electrode, wherein the cap assembly includes an insulating washer between the cap assembly and each of the electrode assembly, in particular the insulating washer is disposed on the cap assembly so as to insulate the cap assembly from the electrode assembly, and the first electrode tab, and the insulating washer includes a base film and a hard coating layer disposed on a surface of the base film.

According to an embodiment, a thickness of the hard coating layer may be greater than or equal to 0.1 µm and less than or equal to 5 µm.

According to an embodiment, the hard coating layer may include a (meth)acrylic resin, silica, and nitrogen.

According to an embodiment, the Mohs hardness of the hard coating layer may be greater than the Mohs hardness of the first electrode tab.

According to an embodiment, the hard coating layer may be disposed between the first electrode tab and the base film so that the first electrode tab is spaced apart from the base film.

According to an embodiment, the base film may include at least one of polypropylene (PP), polyimide (PI), or polyethylene terephthalate (PET).

According to an embodiment, the cap assembly may include a cap plate coupled to one end of the sidewall portion of the case and having an insertion hole; a terminal plate including an insertion portion passing through the insertion hole and a flange portion extending from the insertion portion along one surface of the cap plate; and an insulating layer interposed between the flange portion and the cap plate.

According to an embodiment, the insulating washer may be disposed on the opposite surface of the cap plate.

According to an embodiment, the insulating washer may further include an adhesive layer disposed on the opposite surface of the base film, and the adhesive layer may contact the cap plate.

According to an embodiment, the first electrode tab may be electrically connected to the terminal plate.

According to an embodiment, the first electrode tab may be welded to the terminal plate.

According to an embodiment, the secondary battery may further include a second electrode tab connected to the second electrode, and the second electrode tab may be electrically connected to the case.

According to an embodiment, the second electrode tab may be welded to the case.

According to an embodiment, the secondary battery may include a coin cell or a button cell.

According to an embodiment, a ratio of a height to a diameter of the case may be less than or equal to 1.

According to an embodiment a cap assembly is provided including a cap plate having an insertion hole, a terminal plate including an insertion portion passing through the insertion hole and a flange portion extending from the insertion portion along one surface of the cap plate, an insulating layer interposed between the flange portion and the cap plate, and an insulating washer disposed on the other surface of the cap plate. The insulating washer includes a base film and a hard coating layer disposed on one surface of the base film.

### BRIEF DESCRIPTION OF DRAWINGS

The following drawings attached to this specification illustrate embodiments of the present invention and further describe aspects and features of the present invention together with the detailed description of the present invention. Thus, the present invention should not be construed as being limited to the drawings.
FIG. 1 illustrates a perspective view of a secondary battery according to an embodiment of the present invention.
FIG. 2 illustrates a cross-sectional view of a secondary battery according to an embodiment of the present invention.
FIG. 3 illustrates a cross-sectional view of an insulating washer according to an embodiment of the present invention.
FIG. 4 illustrates a cross-sectional view of a first electrode tab and a cap assembly according to an embodiment of the present invention.
FIG. 5 illustrates a plan view of an insulating washer according to an embodiment of the present invention and a cross-sectional view of a first electrode tab and a cap assembly.
FIG. 6 illustrates a plan view of an insulating washer according to an embodiment of the present invention and a cross-sectional view of a first electrode tab and a cap assembly.
FIG. 7 illustrates a plan view of an insulating washer according to an embodiment of the present invention and a cross-sectional view of a first electrode tab and a cap assembly.
FIG. 8A and FIG. 8B are diagrams illustrating an example of preventing damage to a base film according to an embodiment of the present invention.
FIG. 9 is a flowchart of a method of manufacturing a secondary battery according to an embodiment of the present invention.

### DETAILED DESCRIPTION

Hereinafter, embodiments of the present invention will be described in detail with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B, and C, the phrase may refer to any and all suitable combinations or a subset of A, B, and C, such as A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used only to distinguish one element, component, region, layer, or section from another. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present invention, the size and relative size of the illustrated regions in the drawings may be exaggerated for clarity of explanation. Also, the same reference numerals throughout the specification refer to the same components.

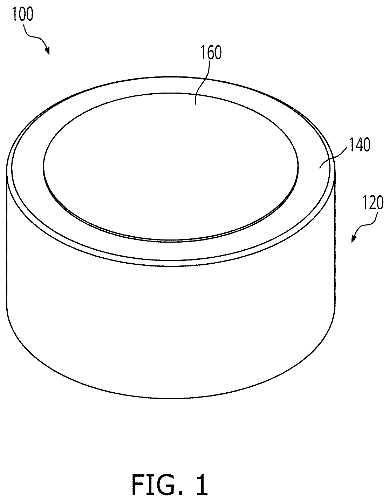

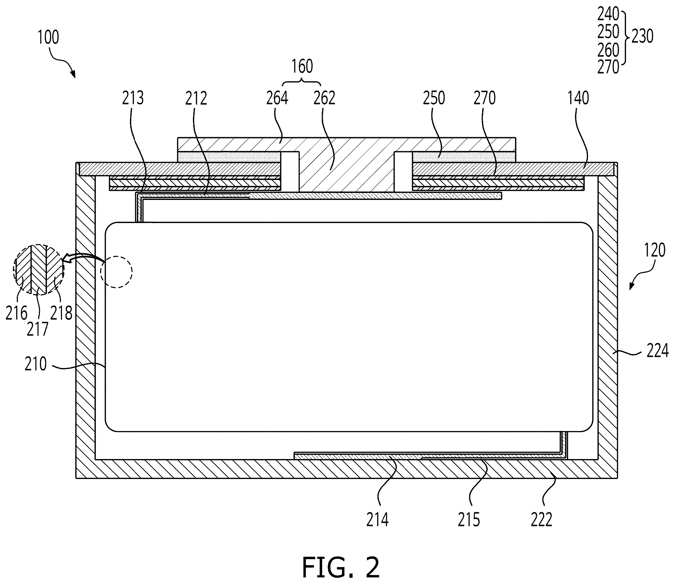

FIG. 1 is a perspective view illustrating a secondary battery according to an embodiment of the present invention. FIG. 2 is a cross-sectional view illustrating a secondary battery according to an embodiment of the present invention. FIG. 2 illustrates a cross-sectional view obtained by cutting the secondary battery 100 of FIG. 1 in a height direction along a line passing through the center of the secondary battery 100.

In an embodiment, the secondary battery 100 may include an electrode assembly 210 formed by winding a first electrode 216, a second electrode 218, and a separator 217 interposed between the first electrode and the second electrode; a case 120 that includes a bottom portion 222, a sidewall portion 224 extending from the bottom portion 222, and an opening facing the bottom portion 222, and that accommodates the electrode assembly 210; a cap assembly 230 coupled to one end of the sidewall portion 224 to seal the opening; and a first electrode tab 212 connected to the first electrode. The cap assembly 230 may include an insulating washer 270 disposed on one side of the cap assembly 230 so as to insulate the cap assembly 230 from the electrode assembly 210 and the first electrode tab 212. The secondary battery 100 may be a coin cell or a button cell. A ratio of a height to a diameter (height/diameter) of the secondary battery 100 may be less than or equal to 1. For example, the secondary battery 100 may have a cylindrical shape.

The electrode assembly 210 may include a first electrode, a second electrode, and a separator. For example, the electrode assembly 210 may be formed by winding the first electrode, the second electrode, and the separator interposed between the first electrode and the second electrode. By being wound, the electrode assembly 210 may form a winding core and may include a through-hole in the winding core.

The first electrode may include a first substrate and a first active material layer located on the first substrate. A first non-coated area of the first substrate, where the first active material layer is not located, may have the first electrode tab 212 extend outward, and the first electrode tab 212 may be electrically connected to a terminal plate 160 of the cap assembly 230. The first electrode tab 212 may be welded to the terminal plate 160.

The second electrode may include a second substrate and a second active material layer located on the second substrate. A second uncoated portion of the second substrate, in which the second active material layer is not located, may extend outward as a second electrode tab 214, and the second electrode tab 214 may be electrically connected to the case 120. The second electrode tab 214 may be welded to the case 120. The first electrode tab 212 and the second electrode tab 214 may extend respectively in opposite directions from the first electrode and the second electrode. For example, the first electrode tab 212 may be formed on one side of the electrode assembly 210 and the second electrode tab 214 may be formed on the other side of the electrode assembly 210. For example, both the first electrode tab 212 and the second electrode tab 214 may be formed on one side of the electrode assembly 210.

In an embodiment, the first electrode tab 212 may be covered by a first cover tape 213, and the second electrode tab 214 may be covered by a second cover tape 215. The first cover tape 213 and the second cover tape 215 may include an insulating material. For example, the insulating material may provide electrical insulation so that current does not pass. The first cover tape 213 may prevent a short circuit between the first electrode tab 212 and other components, and the second cover tape 215 may prevent a short circuit between the second electrode tab 214 and other components.

The first electrode may function as a positive electrode. In this case, for example, the first substrate may be made of aluminum foil, and the first active material layer may include, for example, a transition metal oxide. The second electrode may function as a negative electrode. In this case, for example, the second substrate may be made of copper foil or nickel foil, and the second active material layer may include, for example, graphite.

The separator may have a function of preventing a short circuit between the first electrode and the second electrode, while allowing the movement of lithium ions. The separator may be formed, for example, of a polyethylene film, a polypropylene film, a polyethylene-polypropylene film, or the like.

The case 120 may accommodate the electrode assembly 210 and an electrolyte, and together with the cap assembly 230 may form an exterior of the secondary battery 100. The case 120 may include the bottom portion 222 and a generally cylindrical sidewall portion 224 connected to the bottom portion 222. For example, the case 120 may include the bottom portion 222, the sidewall portion 224 connected to the bottom portion 222, and an opening facing the bottom portion 222. For example, the case 120 may have various shapes such as circular or pouch shapes. The case 120 may be formed of a metal such as aluminum, an aluminum alloy, steel plated with nickel, stainless steel (SUS), or of a laminated film or plastic for a pouch.

The case 120 may accommodate the electrode assembly 210. The electrode assembly 210 may be inserted through the opening formed in one side of the case 120. After the electrode assembly 210 is inserted, the opening of the case 120 may be sealed by the cap assembly 230. The cap assembly 230 may be coupled to one side of the case 120. For example, the cap assembly 230 may be coupled to one end of the sidewall portion 224 of the case 120.

The cap assembly 230 may include a cap plate 140 and the terminal plate 160. The cap plate 140 may cover the opening of the case 120. For example, the cap plate 140 may cover the opening of the case 120 by being coupled to the sidewall portion of the case 120.

An insertion hole may be formed in the cap plate 140. The insertion hole may be formed at approximately the center of the cap plate 140, and the terminal plate 160 may be inserted into the insertion hole. For example, an insertion portion 262 of the terminal plate 160 may pass through the insertion hole of the cap plate 140. The terminal plate 160 may include the insertion portion 262 and a flange portion 264 extending from the insertion portion 262 along one surface of the cap plate 140.

The cap assembly 230 may further include an insulating layer 250 interposed between the terminal plate 160 and the cap plate 140. For example, the insulating layer 250 may be interposed between the flange portion 264 of the terminal plate 160 and the cap plate 140. The insulating layer 250 may have an adhesive property to bond the terminal plate 160 and the cap plate 140. The insulating layer 250 may be made of an insulating material, thereby electrically insulating the terminal plate 160 from the cap plate 140.

In an embodiment, the cap assembly 230 may further include the insulating washer 270. The insulating washer 270 may be disposed on one surface of the cap plate 140. For example, the insulating layer 250 may be disposed on one surface of the cap plate 140, and the insulating washer 270 may be disposed on the opposite surface of the cap plate 140. The opposite surface of the cap plate 140 on which the insulating washer 270 is disposed may be the surface facing the electrode assembly 210 (e.g., the washer 270 may be between the cap plate 140 and the electrode assembly 210). The insulating washer 270 may be made of an insulating material and may insulate a space between the cap plate 140 and the electrode assembly 210, and/or a space between the cap plate 140 and the first electrode tab 212 (e.g., a single and continuous insulating washer 270 may be formed on a lower surface of the cap plate 140 facing the electrode assembly 210 to insulate the cap plate 140 from the electrode assembly 210 and/or from the first electrode tab 212 extending from the electrode assembly 210).

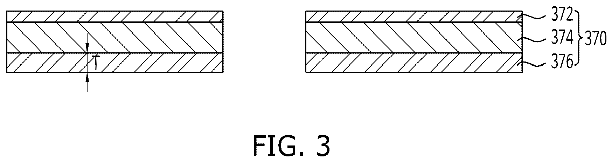

In an embodiment, the insulating washer 270 may include a base film and a hard coating layer disposed on the base film. The specific structure of the insulating washer 270 will be described in detail below with reference to FIG. 3.

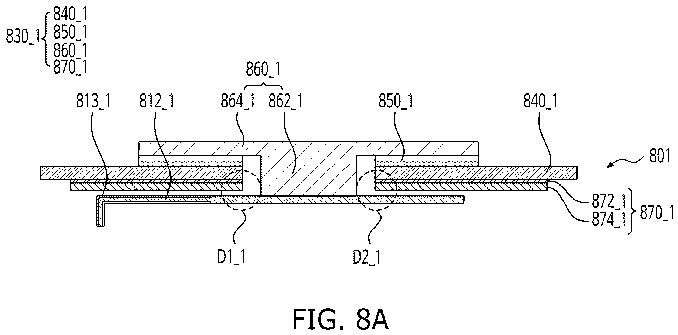

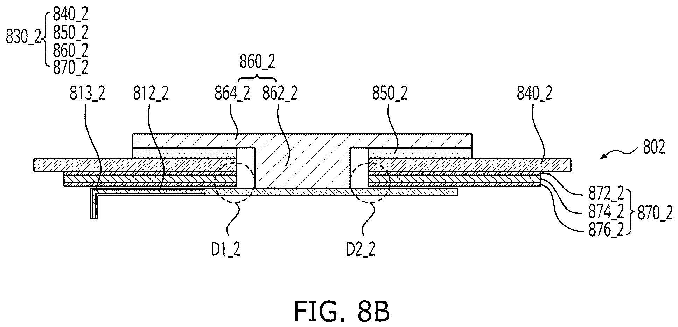

In an embodiment, due to the hard coating layer of the insulating washer 270, the base film may be protected from damage caused by the first electrode tab 212. An example illustrating how the hard coating layer prevents damage to the base film caused by the first electrode tab 212 will be described below in detail with reference to FIGS. 8A and 8B.

FIG. 3 is a cross-sectional view illustrating an insulating washer 370 according to an embodiment of the present invention. The insulating washer 370 may be identical to the insulating washer 270 described with reference to FIG. 2.

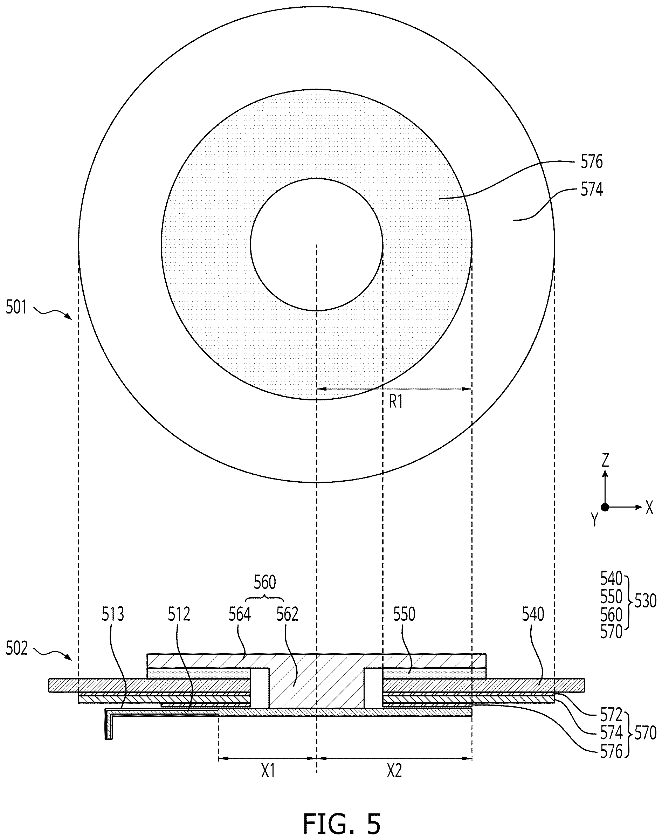

Referring to FIG. 3, the insulating washer 370 may include a base film 374 and a hard coating layer 376 disposed on the base film 374. A thickness (T) of the hard coating layer 376 may be greater than or equal to 0.1 µm and less than or equal to 5 µm. The Mohs hardness of the hard coating layer 376 may be greater than the Mohs hardness of a first electrode tab connected to the first electrode of the electrode assembly. By means of the hard coating layer 376, the first electrode tab may be spaced apart from the base film 374, thereby preventing scratch-type damage of the base film 374 caused by the first electrode tab. For example, referring to FIG. 3, the hard coating layer 376 may be disposed (e.g., continuously) over the entire surface area of the base film 374. In another example, the position and area where the hard coating layer 376 is disposed on the base film 374 may be appropriately changed within a range that can protect the base film 374 from damage caused by the first electrode tab. Examples of where and how much the hard coating layer 376 is disposed will be described below in detail with reference to FIGS. 5 to 7.

In an embodiment, the hard coating layer 376 may include a (meth)acrylic resin, silica, and nitrogen. For example, the hard coating layer 376 may be formed by coating the base film 374 with a coating liquid including a (meth)acrylate resin, a polysilazane or polysiloxazane compound, and a solvent, followed by a curing step, and the finally cured hard coating layer 376 may include a (meth)acrylic resin, silica, and nitrogen.

In an embodiment, the (meth)acrylic resin may include a copolymer resin of a (meth)acrylic monomer. For example, the (meth)acrylic monomer may include at least one of methyl (meth)acrylate, ethyl (meth)acrylate, propyl (meth)acrylate, n-butyl (meth)acrylate, t-butyl (meth)acrylate, iso-butyl (meth)acrylate, pentyl (meth)acrylate, hexyl (meth)acrylate, 2-ethylhexyl (meth)acrylate, heptyl (meth)acrylate, octyl (meth)acrylate, iso-octyl (meth)acrylate, nonyl (meth)acrylate, decyl (meth)acrylate, or dodecyl (meth)acrylate.

In an embodiment, the solvent may include a hydrocarbon, a halogenated hydrocarbon, or an ether. For example, the solvent may include at least one of a hydrocarbon such as pentane, hexane, cyclohexane, toluene, xylene, Solvesso, or Thinner; a halogenated hydrocarbon such as methylene chloride or trichloroethane; or an ether such as dibutyl ether, dioxane, or tetrahydrofuran.

In an embodiment, the base film 374 may include at least one of polypropylene (PP), polyimide (PI), or polyethylene terephthalate (PET).

In an embodiment, the insulating washer 370 may further include an adhesive layer 372. The adhesive layer 372 may be disposed on the base film 374. For example, the hard coating layer 376 may be disposed on one surface of the base film 374, and the adhesive layer 372 may be disposed on the opposite surface of the base film 374 (e.g., the base film 374 may be between the hard coating layer 376 and the adhesive layer 372). The insulating washer 370 may contact the cap plate of the cap assembly via the adhesive layer 372.

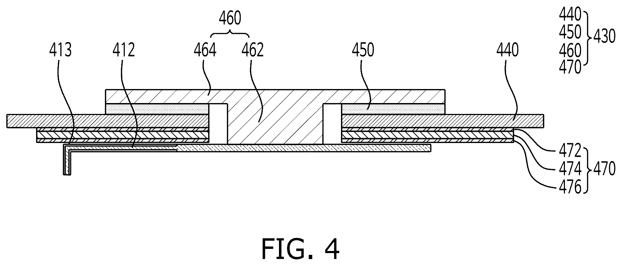

FIG. 4 is a cross-sectional view illustrating a first electrode tab 412 and a cap assembly 430 according to an embodiment of the present invention. The first electrode tab 412 and the cap assembly 430 in FIG. 4 may be identical to the first electrode tab 212 and the cap assembly 230 in FIG. 2.

Referring to FIG. 4, the cap assembly 430 may include a cap plate 440 and a terminal plate 460. The cap plate 440 may include an insertion hole and may be coupled to one end of the sidewall portion of the secondary battery's case. The insertion hole may be formed approximately at the center of the cap plate 440, and the terminal plate 460 may be inserted into the insertion hole. The terminal plate 460 may include an insertion portion 462 passing through the insertion hole of the cap plate 440 and a flange portion 464 extending from the insertion portion 462 along one surface of the cap plate 440.

In an embodiment, the cap assembly 430 may further include an insulating layer 450 interposed between the terminal plate 460 and the cap plate 440. For example, the insulating layer 450 may be interposed between the flange portion 464 of the terminal plate 460 and the cap plate 440. The insulating layer 450 may have an adhesive property to bond the terminal plate 460 and the cap plate 440. The insulating layer 450 may be made of an insulating material, thereby electrically insulating the terminal plate 460 from the cap plate 440.

In an embodiment, the cap assembly 430 may further include an insulating washer 470 (e.g., the insulating washer 370). The insulating washer 470 may be disposed on the cap plate 440. For example, the insulating layer 450 may be disposed on one surface of the cap plate 440, and the insulating washer 470 may be disposed on the opposite surface of the cap plate 440. The opposite surface of the cap plate 440 on which the insulating washer 470 is disposed may be a surface facing the electrode assembly. The insulating washer 470 may be made of an insulating material, thereby electrically insulating a space between the cap plate 440 and the electrode assembly or between the cap plate 440 and the first electrode tab 412.

In an embodiment, the insulating washer 470 may include a base film 474 and a hard coating layer 476 disposed on the base film 474. A thickness of the hard coating layer 476 may be greater than or equal to 0.1 µm and less than or equal to 5 µm, and the Mohs hardness of the hard coating layer 476 may be greater than the Mohs hardness of the first electrode tab 412. By means of the hard coating layer 476, the first electrode tab 412 may be spaced apart from the base film 474 so as to protect the base film 474 from scratch-type damage that may be caused by the first electrode tab 412 due to contraction and expansion of the electrode assembly, vibration of the secondary battery, or dropping of the secondary battery.

For example, referring to FIG. 4, the hard coating layer 476 may be disposed (e.g., continuously) on the entire area of the base film 474. In another example, the position and area of the hard coating layer 476 may be appropriately changed within a range that can cover the area where the first electrode tab 412, not covered by the first cover tape 413, comes into contact with the insulating washer 470. Examples of where and how much the hard coating layer 476 is disposed will be described below in detail with reference to FIGS. 5 to 7.

In an embodiment, the insulating washer 470 may further include an adhesive layer 472. The adhesive layer 472 may be disposed on the base film 474. For example, the hard coating layer 476 may be disposed on one surface of the base film 474, and the adhesive layer 472 may be disposed on the opposite surface of the base film 474. The insulating washer 470 may contact the cap plate 440 of the cap assembly 430 via the adhesive layer 472 (e.g., the adhesive layer 472 may be directly between the base film 474 and the cap plate 440). For example, the insulating layer 450 may be disposed on one surface of the cap plate 440, and the adhesive layer 472 of the insulating washer 470 may be disposed on the opposite surface of the cap plate 440. The opposite surface of the cap plate 440 may be a surface facing the electrode assembly.

In an embodiment, the first electrode tab 412 may be electrically connected to the cap assembly 430. For example, the first electrode tab 412 may be electrically connected to the terminal plate 460 of the cap assembly 430. The first electrode tab 412 and the terminal plate 460 may be welded to each other. For example, the first electrode tab 412 may be welded to the insertion portion 462 of the terminal plate 460.

FIG. 5 illustrates a plan view (501) of an insulating washer according to an embodiment of the present invention and a cross-sectional view (502) of a first electrode tab 512 and a cap assembly 530 according to an embodiment of the present invention. The cross-sectional view (502) is a longitudinal cross-sectional view of the first electrode tab 512 and the cap assembly 530, and the plan view (501) is a plan view of the insulating washer 570 shown in the cross-sectional view (502).

Referring to the plan view (501) and the cross-sectional view (502) in FIG. 5, the cap assembly 530 may include a cap plate 540 and a terminal plate 560. The terminal plate 560 may include an insertion portion 562 and a flange portion 564 extending from the insertion portion 562 along one surface of the cap plate 540, and the insertion portion 562 may be inserted into an insertion hole of the cap plate 540 so that the terminal plate 560 and the cap plate 540 are coupled.

In an embodiment, the cap assembly 530 may further include an insulating layer 550 interposed between the flange portion 564 and the cap plate 540. The insulating layer 550 may be formed in a generally ring shape and may extend in a direction from an inner peripheral surface of the cap plate 540 (defining the insertion hole) toward the outer peripheral surface of the cap plate 540.

In an embodiment, the cap assembly 530 may further include an insulating washer 570 disposed on the cap assembly 530 so as to insulate the cap assembly 530 from the electrode assembly and the first electrode tab 512. The insulating washer 570 may include a base film 574 and a hard coating layer 576 disposed on one surface of the base film 574 (e.g., each of the base film 574 and the hard coating layer 576 may have an annular shape in a top view).

In detail, the hard coating layer 576 may have a generally ring shape (e.g., as viewed in a top view), extending from the inner peripheral surface of the base film 574 (aligned with the insertion hole's center) toward the outer peripheral surface of the base film 574. The radius of the inner circumference of the hard coating layer 576 may correspond to (e.g., be aligned with) the radius of the inner circumference of the base film 574. For example, referring to FIG. 5, the insertion hole, the base film 574, and the hard coating layer 576 may be concentric, and inner radii of the base film 574 and the hard coating layer 576 may be aligned to define an inner sidewall of the insertion hole. For example, referring to FIG. 5, an outer radius of the base film 574 may be longer than that of the hard coating layer 576. The length of the outer circumferential radius R1 of the hard coating layer 576 may correspond to the longer one among the X-axis directional lengths (X1) from the center of the insertion hole to the terminal end of the first cover tape 513 and (X2) from the center of the insertion hole to the terminal end of the first electrode tab 512. By setting the length or width of the hard coating layer 576 to sufficiently cover the exposed surface area of the first electrode tab 512, the first electrode tab 512 may be prevented from damaging the base film 574 of the insulating washer 570 or from causing a short circuit with other components such as the cap plate 540.

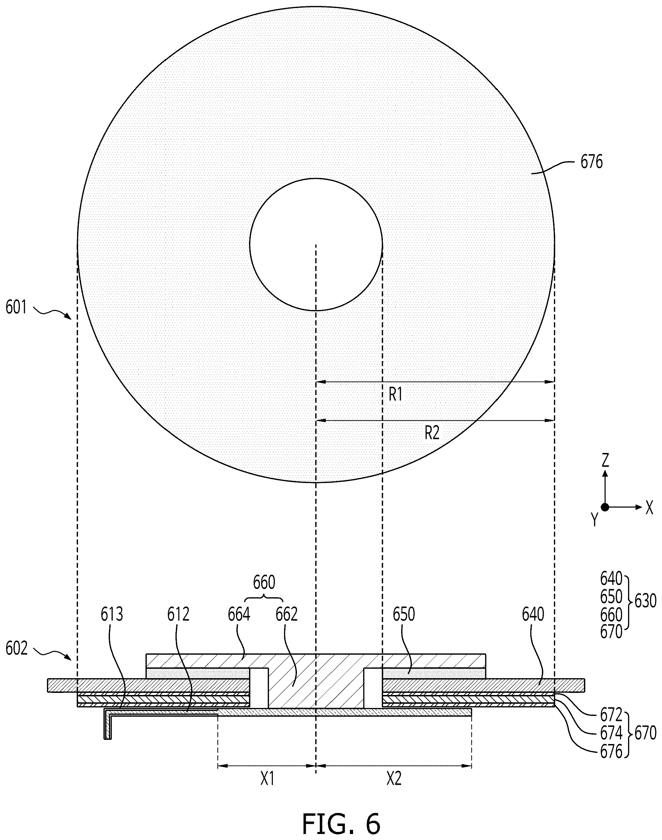

FIG. 6 illustrates a plan view (601) of an insulating washer according to an embodiment of the present invention and a cross-sectional view (602) of a first electrode tab 612 and a cap assembly 630 according to an embodiment of the present invention. The cross-sectional view (602) is a longitudinal cross-sectional view of the first electrode tab 612 and the cap assembly 630, and the plan view (601) is a plan view of the insulating washer 670 shown in the cross-sectional view (602). In FIG. 6, redundant or overlapping configurations described with respect to FIG. 5 are omitted.

Referring to FIG. 6, in an embodiment, the cap assembly 630 may include a cap plate 640, an insulating layer 650, a terminal plate 660, and an insulating washer 670. The insulating layer 650 may be formed in a generally ring shape and may extend in a direction from an inner peripheral surface of the cap plate 640 (defining the insertion hole) toward the outer peripheral surface of the cap plate 640.

In an embodiment, the insulating washer 670 may be disposed on the cap plate 640 so as to insulate the cap assembly 630 from the electrode assembly and the first electrode tab 512. The insulating washer 670 may include a base film 574 and a hard coating layer 676 disposed on one surface of the base film 674.

In an embodiment, the hard coating layer 676 may be generally ring-shaped and may extend from the inner circumferential surface of the base film 674 toward the center of the insertion hole in the direction towards the outer circumferential surface of the base film 674. The radius of the inner circumference of the hard coating layer 676 may correspond to (e.g., be aligned with) the radius of the inner circumference of the base film 674. The outer circumferential radius R1 of the hard coating layer 676 may correspond to (e.g., be aligned with) the outer circumferential radius R2 of the base film 674. By setting the length or width of the hard coating layer 676 to sufficiently cover the exposed surface area of the first electrode tab 612, the first electrode tab 612 may be prevented from damaging the base film 674 of the insulating washer 670 or from causing a short circuit with other components such as the cap plate 640.

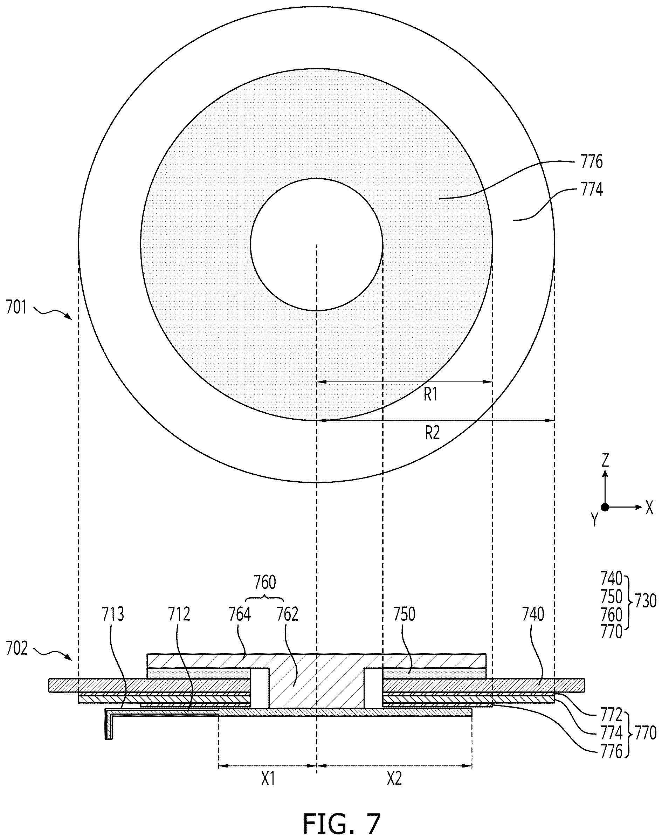

FIG. 7 illustrates a plan view (701) of an insulating washer according to an embodiment of the present invention and a cross-sectional view (702) of a first electrode tab 712 and a cap assembly 730 according to an embodiment of the present invention. The cross-sectional view (702) is a longitudinal cross-sectional view of the first electrode tab 712 and the cap assembly 730, and the plan view (701) is a plan view of the insulating washer 770 shown in the cross-sectional view (702). In FIG. 7, redundant or overlapping configurations described with respect to FIGS. 5 and 6 are omitted.

Referring to FIG. 7, in an embodiment, the hard coating layer 776 may be formed in a generally ring shape, extending from the inner peripheral surface of the base film 774 (aligned with the insertion hole's center) toward the outer peripheral surface of the base film 774. The radius of the inner circumference of the hard coating layer 776 may correspond to (e.g., may be aligned with) the radius of the inner circumference of the base film 774. The length of the outer circumferential radius R1 of the hard coating layer 776 may be longer than the longer one among the X-axis directional lengths (X1) from the center of the insertion hole to the terminal end of the first cover tape 713 and (X2) from the center of the insertion hole to the terminal end of the first electrode tab 712, and may be shorter than the length of the outer circumferential radius R2 of the base film 774. By setting the length or width of the hard coating layer 776 to sufficiently cover the exposed surface area of the first electrode tab 712, the first electrode tab 712 may be prevented from damaging the base film 774 of the insulating washer 770 or from causing a short circuit with other components such as the cap plate 640.

Referring to FIGS. 5 to 7, the inner circumferential radius of the hard coating layer 576, 676, 776 may correspond to the inner circumferential radius of the base film 574, 674, 774. The length of the outer circumferential radius R1 of the hard coating layer 576, 676, 776 may be at least equal to the longer one among the X-axis directional lengths X1 from the center of the insertion hole to the terminal end of the first cover tape 513, 613, 713 and X2 from the center of the insertion hole to the terminal end of the first electrode tab 712, and may be less than or equal to the outer circumferential radius R2 of the base film 774. For example, referring to FIGS. 5 to 7, each of the hard coating layers 576, 676, 776 may have a ring shape in a top view. In another example, each shape of the hard coating layers 576, 676, 776 may be appropriately changed within a range that can cover the contact area where the portion of the first electrode tab 512, 612, 712 not covered by the first cover tape 513, 613, 713 comes into contact with the insulating washer 570, 670, 770.

FIGS. 8A and 8B are diagrams illustrating an example of preventing damage to a base film according to an embodiment of the present invention. FIG. 8A shows a first example (801), which is a cross-sectional view of a first electrode tab 812_1 and a cap assembly 830_1 according to a comparative example, and FIG. 8B shows a second example (802), which is a cross-sectional view of a first electrode tab 812_2 and a cap assembly 830_2 according to the present invention.

The cap assembly 830_1 of the first example (801) may include a cap plate 840_1, an insulating layer 850_1, a terminal plate 860_1, and an insulating washer 870_1. The terminal plate 860_1 may include an insertion portion 862_1 and a flange portion 864_1 extending from the insertion portion 862_1 along one surface of the cap plate 840_1. An insertion hole may be formed at the center of the cap plate 840_1, and the insertion portion 862_1 of the terminal plate 860_1 may be inserted into the insertion hole so that the terminal plate 860_1 and the cap plate 840_1 are coupled. The insulating layer 850_1 may be interposed between the flange portion 864_1 of the terminal plate 860_1 and the cap plate 840_1. The insulating washer 870_1 may include a base film 874_1 and an adhesive layer 872_1 disposed on the base film 874_1.

In the first example (801), a portion of the first electrode tab 812_1 not covered by a first cover tape 813_1 may contact the base film 874_1 at the contact points D1_1 and D2_1 due to contraction and expansion of the electrode assembly, vibration of the secondary battery, or dropping of the secondary battery. By contacting the first electrode tab 812_1, the base film 874_1 may be damaged, and a short circuit may occur between the first electrode tab 812_1 and the cap plate 840_1.

The cap assembly 830_2 of the second example (802) may include a cap plate 840_2, an insulating layer 850_2, a terminal plate 860_2, and an insulating washer 870_2. The terminal plate 860_2 may include an insertion portion 862_2 and a flange portion 864_2 extending from the insertion portion 862_2 along one surface of the cap plate 840_2. An insertion hole may be formed at the center of the cap plate 840_2, and the insertion portion 862_2 of the terminal plate 860_2 may be inserted into the insertion hole so that the terminal plate 860_2 and the cap plate 840_2 are coupled. The insulating layer 850_2 may be interposed between the flange portion 864_2 of the terminal plate 860_2 and the cap plate 840_2. The insulating washer 870_2 may include a base film 874_2, a hard coating layer 876_2 disposed on one surface of the base film 874_2, and an adhesive layer 872_2 disposed on the opposite surface of the base film 874_2. The Mohs hardness of the hard coating layer 876_2 may be greater than the Mohs hardness of the first electrode tab 812_2.

In the second example (802), a portion of the first electrode tab 812_2 not covered by a first cover tape 813_2 may contact the hard coating layer 876_2 at the contact points D1_2 and D2_2 due to contraction and expansion of the electrode assembly, vibration of the secondary battery, or dropping of the secondary battery. Because of the hard coating layer 876_2, the first electrode tab 812_2 is spaced apart from the base film 874_2, thus preventing scratch-type damage to the base film 874_2 by the first electrode tab 812_2 that may occur during contraction and expansion of the electrode assembly, vibration of the secondary battery, or dropping of the secondary battery. A secondary battery according to various embodiments of the present invention that includes such a configuration may reduce the risk of a short circuit and improve safety.

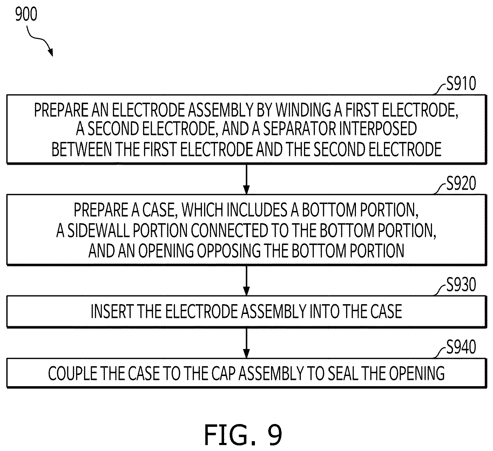

FIG. 9 is a flowchart illustrating a method of manufacturing a secondary battery according to an embodiment of the present invention.

Referring to FIG. 9, the manufacturing method (900) of the secondary battery according to an embodiment of the present invention may begin with preparing an electrode assembly by winding a first electrode, a second electrode, and a separator interposed between the first electrode and the second electrode (S910). The electrode assembly may further include a first electrode tab connected to the first electrode and a second electrode tab connected to the second electrode.

Next, a case, which includes a bottom portion, a sidewall portion connected to the bottom portion, and an opening opposing the bottom portion, may be prepared (S920). Subsequently, the electrode assembly may be inserted into the case (S930). During the process of inserting the electrode assembly into the case, the first electrode tab may be welded to the cap assembly, and the second electrode tab may be welded to the case.

Next, the case and the cap assembly may be coupled together to seal the opening (S940). In an embodiment, the cap assembly may include a cap plate having an insertion hole; a terminal plate including an insertion portion passing through the insertion hole and a flange portion extending from the insertion portion along one surface of the cap plate; an insulating layer interposed between the flange portion and the cap plate; and an insulating washer disposed on the opposite surface of the cap plate. The insulating washer may include a base film, a hard coating layer disposed on one surface of the base film, and an adhesive layer disposed on the opposite surface of the base film.

The flowchart of FIG. 9 and the above description are only one example of the present invention. In another example, one or more steps of the flowchart and the above description may be added/changed/deleted, the order of one or more steps may be changed, and one or more steps may be performed simultaneously.

By way of summation and review, an electrode tab may be formed on the electrode assembly of the secondary battery. During charging and discharging of the secondary battery, the electrode assembly may undergo contraction and expansion. Inside the case, the electrode tab of the electrode assembly may move due to the contraction and expansion of the electrode assembly or due to vibration or dropping of the secondary battery. When the electrode tab moves and comes into contact with other components inside the secondary battery, the components inside the secondary battery may be damaged. If the components inside the secondary battery are damaged, an internal short circuit of the secondary battery may occur.

In contrast, the present invention provides a hard coating layer between the base film and the electrode tab, so that the electrode tab and the base film are spaced apart from each other, and contact between the electrode tab and the base film may be prevented. Through this structure, damage to the base film that may occur by contact with the electrode tab can be prevented.

According to various embodiments of the present invention, even if the electrode tab moves due to contraction and expansion of the electrode assembly, vibration of the secondary battery, or dropping of the secondary battery, the hard coating layer formed on the base film may protect the base film from damage caused by the electrode tab. Through this structure, a short circuit between the electrode tab and the cap assembly can be prevented.

## Claims

1. A secondary battery (100), comprising:
a wound electrode assembly (210) including a first electrode (216), a second electrode (218), and a separator (217) between the first electrode (216) and the second electrode (218);
a case (120) accommodating the electrode assembly (210), the case (120) including a bottom portion (222), a sidewall portion (224) connected to the bottom portion (222), and an opening facing the bottom portion (222);
a first electrode tab (212, 412, 512, 612, 712, 812_1) connected to the first electrode (216); and
a cap assembly (230, 430, 530, 630, 730, 830_1, 830_2) coupled to one end of the sidewall portion (224) to seal the opening, the cap assembly (230, 430, 530, 630, 730, 830_1, 830_2) including an insulating washer (270, 370, 470, 570, 670, 770, 870_1, 870_2) between the cap assembly (230, 430, 530, 630, 730, 830_1, 830_2) and each of the electrode assembly (210) and the first electrode tab (212, 412, 512, 612, 712, 812_1, 812_2), and the insulating washer (270, 370, 470, 570, 670, 770, 870_1, 870_2) including a base film (374, 474, 574, 674, 774, 874_1, 874_2) and a hard coating layer (376, 476, 576, 676, 776, 876_2) on a surface of the base film (374, 474, 574, 674, 774, 874_1, 874_2).

2. The secondary battery (100) according to claim 1, wherein a thickness of the hard coating layer (376, 476, 576, 676, 776, 876_2) is greater than or equal to 0.1 µm and less than or equal to 5 µm.

3. The secondary battery (100) according to claim 1 or 2, wherein the hard coating layer (376, 476, 576, 676, 776, 876_2) includes a (meth)acrylic resin, silica, and nitrogen.

4. The secondary battery (100) according to any of claims 1 to 3, wherein a Mohs hardness of the hard coating layer (376, 476, 876_2) is greater than a Mohs hardness of the first electrode tab (212, 412, 812_2).

5. The secondary battery (100) according to any of claims 1 to 4, wherein the hard coating layer (376, 476, 576, 676, 776, 876_2) is between the first electrode tab (212, 412, 512, 612, 712, 812_2) and the base film (374, 474, 574, 674, 774, 874_2), the first electrode tab (212, 412, 512, 612, 712, 812_2) being spaced apart from the base film (374 474, 574, 674, 774, 874_2) through the hard coating layer (376, 476, 576, 676, 776, 876_2).

6. The secondary battery (100) according to any of claims 1 to 5, wherein the base film (374, 474, 574, 674, 774, 874_1, 874_2) includes at least one of polypropylene (PP), polyimide (PI), or polyethylene terephthalate (PET).

7. The secondary battery (100) according to any of claims 1 to 6, wherein the cap assembly (230, 430, 530, 630, 730, 830_1, 830_2) includes:
a cap plate (140, 440, 540, 640, 740, 840_1, 840_2) including an insertion hole and coupled to the one end of the sidewall portion (224) of the case (120);
a terminal plate (160, 460, 560, 660, 760, 860_1, 860_2) including an insertion portion (262, 462, 562, 662, 672, 772, 872_1, 872_2) passing through the insertion hole and a flange portion (264, 464, 564, 664, 774, 874_1, 874_2) extending from the insertion portion (262, 462, 562, 662, 672, 772, 872_1, 872_2) along a surface of the cap plate (140, 440, 540, 640, 740, 840_1, 840_2); and
an insulating layer (250, 450, 550, 650, 750, 850_1, 850_2) between the flange portion (264, 464, 564, 664, 774, 874_1, 874_2) and the cap plate (140, 440, 540, 640, 740, 840_1, 840_2).

8. The secondary battery (100) according to claim 7, wherein the insulating washer (270, 370, 470, 570, 670, 770, 870_1, 870_2) and the insulating layer (250, 450, 550, 650, 750, 850_1, 850_2) are on opposite surfaces of the cap plate (140, 440, 540, 640, 740, 840_1, 840_2).

9. The secondary battery (100) according to claim 7 or 8, wherein the insulating washer (270, 370, 470, 570, 670, 770, 870_2) further includes an adhesive layer (372, 472, 572, 672, 772, 872_1, 872_2), the adhesive layer (372, 472, 572, 672, 772, 872_1, 872_2) and the hard coating layer (376, 476, 576, 676, 776, 876_2) being on opposite surfaces of the base film (374, 474, 574, 674, 774, 874_2), and the adhesive layer (372, 472, 572, 672, 772, 872_1, 872_2) contacting the cap plate (140, 440, 540, 640, 740, 840_1, 840_2).

10. The secondary battery (100) according to any of claims 7 to 9, wherein the first electrode tab (212, 412, 512, 612, 712, 812_1, 812_2) is electrically connected to the terminal plate (160, 460, 560, 660, 760, 860_1, 860_2).

11. The secondary battery (100) according to any of claims 7 to 10, wherein the first electrode tab (212, 412,512, 612, 712, 812_1, 812_2)) is welded to the terminal plate (160, 460, 560, 660, 760, 860_1, 860_2).

12. The secondary battery (100) according to any of claims 1 to 11, further comprising a second electrode tab (214) connected to the second electrode (218), the second electrode tab (214) being electrically connected to the case (120).

13. The secondary battery (100) according to any of claims 1 to 12, wherein the second electrode tab (214) is welded to the case (120).

14. The secondary battery according to any of claims 1 to 13, wherein the secondary battery (100) includes a coin cell or a button cell.

15. The secondary battery (100) according to any of claims 1 to 14, wherein a ratio of a height to a diameter of the case (120) is less than or equal to 1.
